# EUROPEAN PATENT SPECIFICATION

(11) **EP 3 419 830 B1**
(45) Date of publication and mention of the grant of the patent: **26.10.2022**
(21) Application number: 17708421.7
(22) Date of filing: 23.02.2017
(51) Int. Cl.: B41J 11/46, B26D 5/00, B26F 1/38, G06K 19/06

(54) **CNC FLATBED CUTTING MACHINE, ITS METHOD OF OPERATION, AND A GRAPHICS SHEET WITH A FIDUCIAL THAT INDICATES THE ORIENTATION OF THE GRAPHICS SHEET**
CNC-FLACHBETTSCHNEIDEMASCHINE, VERFAHREN ZU DEREN BETRIEB UND GRAFISCHE FOLIE MIT MARKER ZUR ANZEIGE DER AUSRICHTUNG DER GRAFISCHEN FOLIE
MACHINE DE DÉCOUPE À PLATEAU À COMMANDE NUMÉRIQUE PAR CALCULATEUR, SON PROCÉDÉ DE FONCTIONNEMENT ET FEUILLE GRAPHIQUE AVEC REPÈRE INDIQUANT L'ORIENTATION DE LA FEUILLE GRAPHIQUE

(30) Priority: 24.02.2016 DK 201670094
(43) Date of publication of application: 02.01.2019
(73) Proprietor: Zünd Skandinavien ApS, 8300 Odder (DK)
(72) Inventor: HANSEN, Jacob, 8382 Hinnerup (DK)
(74) Representative: Patrade A/S
(86) International application number: PCT/DK2017/050044
(87) International publication number: WO 2017/144060

(56) References cited:
- EP-A1- 2 488 333
- WO-A1-2005/066881
- WO-A1-2015/040657
- DE-A1-102012 015 695
- US-A- 5 978 521
- US-A1- 2007 084 935
- US-A1- 2007 098 234
- Anonymous: "> What Size Should A Printed QR Code Be?", , 18 January 2011 (2011-01-18), XP055393068, Retrieved from the Internet: URL:https://blog.qrstuff.com/2011/01/18/wh at-size-should-a-qr-code-be#comments [retrieved on 2017-07-21]

## Description

### FIELD OF THE INVENTION

The present invention relates to a CNC flatbed cutting machine for cutting graphics sheets and to a method of operating the CNC flatbed cutting machine. It also relates to use of fiducials for finding the orientation and position of the graphics sheets.

### BACKGROUND OF THE INVENTION

For the operation of CNC (computer numerical control) flatbed cutting machines, a common problem is determination of the precise location and orientation of graphical sheets when placed on the flatbed for cutting. Furthermore, the determination of an identification code is a critical issue.

International patent application WO2005/066881 discloses an identifier, typically a bar code, on a paper roll for cutting, where a laser based sensor, typically a bar code scanner is used for reading the identifier. European patent application EP1321839A2 discloses a cutting machine with a camera system above the cutting area in order to read fiducials on a sheet of material.

US5978521 discloses a machine vision method for calibrating the imaging reference frame of a camera to that of a moveable object imaged by the camera. US2007/0098234 discloses two-dimensional fiducial markers for use in augmented reality and three dimensional position sensors. WO2015040657 discloses an image processing device that enhances the visibility of display information of markers for the user. DE102012015695 discloses a method for recognizing a QR code by a camera of a smartphone.

With reference to prior art FIG. 1, European patent EP2488333B1 discloses an apparatus 1 with a double camera system on a flatbed cutting machine, where one stationary camera 9 gives an overview of the work plane 2 on the flatbed cutting machine, and a mobile camera 7 is used for more precise determination of the location and orientation of the articles 4, for example graphics sheets, that are placed on the work plane 2 for cutting. A portal structure, arranged above the work plane 2, carries a mobile operation group 5 that contains the mobile camera 7 and a cutting member 6. By computer control, the operation group 5 is moved parallel to the work plane 2 for cutting the article 4 along predetermined paths. For recognition of the cutting path, the graphics sheet 4 is provided with numerous crosses that are readily recognised as reference marks by the stationary camera 9. Alternatively, the geometrical characteristics of the graphics 11A, 11B, 11C are recognised.

The system in European patent EP2488333B1 has some drawbacks. In order to determine a correct cutting path, it is necessary to identify the graphics on the work plane 2 correctly also in the computer system. Thus, the computer must find geometrical characteristics in the computer database among a plurality of geometrical characteristics stored therein. This requires substantial computing capacity in that the graphics on the work plane have to be correctly recognised and identified and a correspondingly resembling graphics with related cutting curve determined from the database. However, the recognition of crosses or the recognition of geometrical characteristics, as in EP2488333, implies a relatively high risk for error in the process of determining the correct cutting curve, especially when there is only a slight variation of the printings on different graphics sheets. The correct finding of a counterpart in the database of the imaged geometrical characteristics is especially a problem when graphics are slightly distorted due to stretching of the sheet, which is typically the case, as also discussed below. The method and apparatus disclosed in EP2488333 are according to the preambles of independent claims 1 and 12, respectively.

A movable double camera system is also disclosed in US6619168 by Alsten and Andersen, where one camera has a larger field of view than the other in order to easier find special marks that indicate position and orientation of the sheet. The system as disclosed therein further explains compensation methods for the cuttings curves around distorted graphics. Such compensation in the cutting curve on the basis of reading markers on the graphics is also disclosed in detail US6772661. A camera is used for reading a plurality of reference markers on the sheet around the graphics in order to calculate deviations from the expected cutting curve due to two dimensional distortion of the sheet. WO2015/061131 discloses a flatbed cutter with a movable camera that images non-predetermine portions of the graphics in order to verify possible distortions of the graphics prior to cutting. In order to identify the graphics in the computer system, A QR code (Quick Response code) has to be found by the mobile camera.

Although, these systems are useful for finding the position and orientation of graphics, they are not optimised with respect to quick identification of the graphics relatively to various other graphics sheets and the corresponding cutting curves stored in the computer system.

For these reasons, there is a need for improvements. Especially, there is a need for improvements with respect to quick and automatic recognition of the correct graphics and safe determination corresponding cutting curve for a sheet that is placed on the work plane of the CNC cutting machines, especially if this sheet is placed in an arbitrary location on the work plane and with an arbitrary orientation.

### DESCRIPTION / SUMMARY OF THE INVENTION

It is therefore the objective of the invention to provide an improvement in the art. In particular, it is the objective to provide an improvement in the operation of CNC flatbed cutting machines with respect to identification of the graphics sheets placed on the work plane. Especially, it is the objective to provide such an improvement irrespectively of the location and orientation of the graphics sheet on the work plane of the machine. One or more of these objectives are achieved with a method and apparatus for cutting printed sheets as described in more detail in the following.

The apparatus comprises a flatbed cutting machine that has a work plane with an upper surface for receiving printed sheets thereon, for example paper sheets, cardboard, leather, and plastics, including laminates. The sheets for cutting are provided with graphics as well as prints that are used for identification of the sheet. For example, the sheet has printed thereon an optically readable two-dimensional code for a numeric or alphanumeric sequence. Examples of such optically readable codes comprise one dimensional sequences, such as bar codes, or two-dimensional sequences, such as matrix codes, an example of which is a QR code (Quick Response code). Typically, the two-dimensional code is provided in a region outside the graphics, for example, in the region that is cut away. Optionally, even further parts of the print comprise reference markers for adjustment of the cutting curve in case of two-dimensional distortions of the sheet, the latter being especially pronounced for textile sheets.

A first digital camera is arranged above the work plane, providing digital images of part of the upper surface or of the entire upper surface of the work plane. If the first camera is a stationary camera and only images part of the upper surface, imaging of the entire upper surface is achieved with multiple of such stationary cameras. Alternatively, the first camera is moveable, for example rotational or translational or both, and arranged to capture images of various parts of the work plane in different orientations or positions of the camera. The first camera is functionally connected to a computer system that is receiving digital images from the first camera. The digital images have pixels, where each pixel corresponds to an area element on the work plane given by the camera chip pixel size multiplied by the magnification by the optics of the camera. For example, the size of an area element is in the range of 0.2 - 1 mm, optionally in the range of 0.4-0.8 mm.

The computer system is programmed to analyse the received digital images with respect to image data of a specific type of fiducial marker, in the following called fiducial, for example a QR code, that comprises an optically readable two dimensional code with a numerical or alphanumerical sequence, represented by dark and bright fields or by differently coloured fields, each field having one of two or more of a set of predetermined colours. Important is that the fields in the digital image can be clearly captured and differentiated as well as decoded by the computer system in cooperation with the camera.

Advantageously, each of the fields has a size which is larger than 2.5 times the area elements, for example the size of at least 3 or even at least 4 area elements, in order for the array of fields to be properly recognised. However, for certain specially designed fiducials with optically readable two-dimensional codes, the reading can be performed despite being at the limit of optical resolution of the camera, as will be explained in more detail in the following.

The machine further comprises an operating group with a cutting member for cutting the sheets when placed on the work plane. The operating group is provided mobile along the work plane, typically parallel to the work plane, at a second distance to the work plane. For example, the operating group is carried in one linear direction mobile along a bar which in itself is linearly mobile in a transverse direction, such that the combination of the movement along the bar and the transverse movement of the bar allows movement of the cutting member on the operating group along any arbitrary cutting curve along the work plane.

The first camera is provided remote and free from the operating group at a first distance larger than the second distance for preventing mechanical collision between the operating group and the first camera when the operating group is moving on any arbitrary curve along the work plane. The first camera, be it stationary or movable, is provided above the operating group and its carrier, for example the mobile bar. Typically, the operating group is provided within a distance from the work place of less than 1 meter or even less than 0.5 meter, whereas the first camera is provided at a distance of more than 1 meter, typically more than 2 meter. For example, the operating group is provided below a distance of 0.5 or 1 meter from the work plane, and the first camera is provided above 1 meter or 2 meter from the work plane, preventing the operating group from colliding with the first camera.

For example, a relevant measure for the first distance is the lower edge of the first camera and a potential first camera carrier, and a relevant measure of the second distance is the uppermost edge of the operation group and its carrier. Important is that there is no collision between the first camera with the operation group and its carrier. For operation, a printed sheet comprising a fiducial or multiple fiducials is placed on the work plane and imaged by the first camera while the sheet is on the work plane. The image of the sheet is digitally transferred to the computer system and analysed by the computer system with respect to image data resembling characteristics of the fiducial, such that the fiducial is found in the image. The optically readable two dimensional code of the fiducial, with the array or matrix of dark fields and bright fields or differently coloured fields, is derived from the image of the fiducial and transformed into a numerical or alphanumerical code, which in its simplest form is a binary code. The optically readable two dimensional code is decoded by the computer system for extraction of an ID code that uniquely identifies the graphics on the sheet for differentiation of it from other sheets with different graphics. Thus, the code in the fiducial, represented by the dark and bright or differently coloured fields, uniquely identifies the graphics on the sheet. Once the graphics are identified by the ID code, the computer accesses a digital database and extracts stored data uniquely related to the extracted ID code; and a cutting curve for the graphics specific for the ID code is determined by the computer system on the basis of the extracted stored data. The determined cutting curve is submitted as computer instructions to the cutting machine for moving the operating group with the cutting element on the cutting curve along the work plane for cutting out graphic parts from the sheet along the cutting curve.

The alphanumerical code of the fiducial is not necessarily limited to the ID code, but may contain further information, for example material type, thickness of the graphics sheet, date, number of copies, and customer-related identification. Alternatively, such information is stored in the database in relation to the specific ID code.

Although, in principle, the computer system can be configured for determining the orientation and the position of the graphics of the sheet on the work plane by image recognition of asymmetrical markers or of the geometrical characteristics of the graphics, similar to the method as disclosed in EP2488333B1, instead, the image of the fiducial can be used for determining the orientation and the position of the graphics on the sheet and, optionally, also the orientation and the position of the sheet itself, which, however, is not strictly necessary, seeing that graphics are not always printed in a precise distance to the edges of the sheet. In this case, the fiducial comprises specific graphical elements from which the orientation and position of the fiducial is determined by the computer system, once the image is transferred to the computer system.

As the position and orientation of the fiducial relatively to the graphics on the sheet are predetermined, the position and orientation of the graphics, and potentially also of the sheet, are given, once the position and orientation of the fiducial are determined.

In a more detailed embodiment, the extracted stored data comprise computer readable information about the position and orientation of the fiducial relatively to the graphics on the sheet. By the computer system, the orientation and position of the fiducial on the work plane is determined on the basis of the image of the fiducial. Further, the orientation and position of the graphics on the work plane are calculated from the determined position and orientation of the fiducial in combination with the extracted stored data containing the position and orientation of the fiducial relatively to the graphics.

For example, the specific graphical elements for determining the orientation and position of the fiducial comprises frames, lines, and/or indicated fields that are recognizable by the camera as resembling part of a fiducial. In addition, the fiducial can contain other graphical elements which assist in easy and safe recognition of the fiducial, its position and specific orientation, for example specific easy recognizable frames and related marks that uniquely define a direction for the fiducial as well as a reading direction for the code.

For example, the fiducial comprises a printed rectangular or square frame in addition to an orientation marker that uniquely indicates a reading direction of the code relatively to the frame. Optionally, the frame is provided around the optically readable two-dimensional code. Alternatively or in addition, the frame is part of the optically readable two-dimensional code. When the frame is located in the image from the camera and the frame and orientation marker identified by the computer, the orientation and position of the fiducial can be determined from the frame and the orientation marker. For example, a QR code comprises distinctly framed squares in only three corners of its matrix, which is a useful set of unique markers for determining the orientation and position of the fiducial and the graphics on the sheet. Thus, in some embodiments, the optically readable two dimensional code is used for determining the orientation and position of the fiducial on the work plane. Once, the orientation and position of the fiducial on the work plane are found, it yields information about the orientation and position of the graphics on the sheet, and potentially also the orientation and position of the sheet itself.

Thus, the fiducial has multiple functions combined in a safe way, namely the extractable ID code and the ability to serve to determining the position and the orientation. For example, the ID code contains a specific date of printing and an identifying graphics number related to the specific printing date.

Although, the computer system extracts a theoretical cutting curve from the database in relation to the ID code, the theoretical cutting curve is not always precise relatively to the actual sheet, as the sheet may have been subject to shrinkage or expansion during or after printing the graphics on the sheet, which causes distortion of the graphics and the related actual cutting curve. For this reason, optionally, compensation methods are used, where the theoretical cutting curve is modified to yield a more precise actual cutting curve.

For example, in order to determine the distortion, reference markers are printed on the sheet distributed around the graphics. The actual positions of these reference markers on the image of the sheet are read by the computer and compared to theoretical predetermined positions of such markers, the latter being stored as a first set of digital data in the computer database in relation to the unique ID code of the graphics. Next, deviations between the theoretical predetermined positions and the read actual positions are then used by the computer to modify the theoretical cutting curve into a precise actual cutting curve. The modified cutting curve is finally used for precise cutting despite two-dimensional distortions of the graphics on the sheet.

The compensation method requires a sufficiently high precision of the image taken by the first camera, which typically is not a problem, as the reference marks can be readily recognised if having a size similar to the size of the recognizable fields in the optically readable two dimensional code.

However, in some cases, higher precision can be desirable and can be obtained by providing the first camera with zoom optics and mounting the first camera mobile, for example translational parallel with the work plane or rotational in order to capture different parts of the work plane with a higher magnification when using the zoom. By zooming out, a large part of the work plane or the entire work plane can be captured by the mobile first camera, and by zooming in, a minor part of the work plane with the graphics sheet can be captured with higher magnification and optical resolution, in order to more precisely determine the position of the graphics, the fiducial and of any other potential marker, especially in relation to correction of the cutting curve in order to take into account possible distortions of the graphics.

In alternative embodiments, especially if the first camera is stationary, higher precision is obtained by employing a second camera, which is a mobile camera provided on the operation group in order to find the reference markers with higher spatial resolution on the printed sheets. This second, mobile camera does not image the entire work plane and not even large parts of it, but typically only images a small area around the reference markers, for example and area with a size of 5-20 cm, which is in contrast to size of the work plane, which is typically several meters wide.

As the first camera, for example stationary camera, is used for an overview image of the work plane, the first camera is arranged at a larger distance from the work plane than the second, mobile camera and images a larger area of the upper surface than the second camera, however, typically, with a lower resolution. Due to the shorter distance to the work plane and the fact that the second camera for precise measurement can be moved for imaging the reference markers in the middle of the second camera's field of view, influence of optical distortions by optics is minimized, which increases the precision of the final cutting curve. Thus, whereas the finding of the reference markers by the first camera requires position determination from the image itself, including optional compensation for possible optical distortion, the finding of the reference markers by the second camera requires reading of the coordinate position of the operation group relatively to a reference position on the work plane when the reference marker is at a predetermined position in the field of view of the second camera, for example in the middle of the field of view. As the camera and the cutting element are moved with the operation group, determination of the reference points by the second camera yields high precision.

The second camera, being mobile on the operation group, is automatically moved from one theoretical marker positon to the next by instructions from the computer. At each theoretical predetermined position, it images the marker, and the computer determines the precise actual position of the reference marker, possibly by adjusting the position of the camera in minor steps from the theoretical predetermined position to the precise actual position of the reference marker as determined from the continuous imaging by the second camera. Possible deviations between the predetermined theoretical marker positions and the precise actual marker position are used by the computer system to adjust the cutting curve for precise cutting despite two-dimensional distortions of the graphics on the sheet.

The fiducial comprises dark parts, for example black parts, and bright parts, for example white parts. Instead of using black and white, also a two colour differentiation can be used, especially, if the camera is equipped with a colour CCD and the computer is correspondingly programmed to recognise the fields in the field array by differentiating between the colours in order to determine the code represented by the field array or field matrix.

An example is given in the following of a fiducial that has been used experimentally with success and which is easily recognizable by the computer system from the images taken from the fiducial. The reading and decoding of this specific fiducial has turned out to be robust even if the structures of the fiducial are at the limit of the optical resolution of the camera.

This fiducial comprises a consecutive array of a predetermined plurality of adjacent, identically-sized, binary fields, each of the binary fields either being a dark field or a bright field, each representing either digital 0 or 1 in order for the entire array representing a binary code. Alternatively, the dark and bright fields are substituted by differently coloured fields, each field having one of two colours. Important is that the two type of fields in the digital image can be clearly differentiated by the computer system in cooperation with the camera. Advantageously, the binary field array is linear along a straight line. It is also possible that the binary fields only have identical extension along this line and not necessarily transversely to the line. However, identically sized binary fields, especially square binary fields, have shown an advantage of good recognition by the computer system. A suitable size of the binary fields is in the range of 2 to 6 mm, for example in the range of 3 to 5 mm. In a practical experiment, square binary fields of 4 mm have been found useful.

As a typical work plane has a size of approximately 3 m, a standard CCD chip with 3000-6000 pixels times 3000-6000 pixels is sufficient for recognising such binary fields. In a practical experiment, an upper surface of a work plane of 3.2 m x 1.6 m was imaged by an off-the-shelf CCD camera having standard optics and a CCD chip with 5184 x 3456 pixels, and the resulting image was suitable for recognising the binary fields in the fiducial.

Along with the recognition of the fiducial and the binary fields, also the position and orientation of the sheet on the work plane was determined and used by the computer system.

Experiments have shown that the fiducial is found easily and quickly if the dark and bright, for example black and white, identically-sized binary fields are surrounded by a dark frame. Alternatively, if the fiducial is not using dark and bright, for the differentiation between the fields in the consecutive array, the fiducial may have such frame in a specific colour, for example the colour of one type of the fields, for example the type of fields representing the binary 1.

For example, the fiducial for the above method comprises a dark or specifically coloured rectangular frame with a line-thickness in the range of 1-3 mm inside which the consecutive array of binary fields are provided along a straight line. For example, each of the binary fields has a size along the straight line in the range of 2 to 6 mm, optionally in the range of 3 to 5 mm, for example 4 mm. A useful length of the fiducial is in the range of 80-160 mm and a useful width is 10-20 mm. The number of binary fields inside the frame is advantageously in the range of 20-40 fields.

An example of a useful fiducial with a proper recognition by the computer system when using a chip with 3000 to 6000 pixels times 3000 to 6000 pixels is as follows. The fiducial is rectangular with a longitude and a length along the longitude of 121 mm and a width of 14 mm. A bright frame is provided inside a dark frame, the dark frame having a frame thickness of 2.5 mm, and the bright frame having a thickness of 2.5 mm. The number of binary fields inside the white frame is 26, wherein each field is a square with a 4 mm long edge. At one end of the fiducial, the fiducial comprises an orientation mark comprising a bright square of 4.5 x 4.5 mm which is offset from a central line that extends centrally along the longitude of the fiducial. The offset square uniquely defines a reading direction for the binary code in the sequence of 0 and 1 given by the binary field array.

The development of the fiducial has been motivated by constraints with respect to practicability, low cost for production and maintenance of the reading system, minimized data storage and computing speed and power as well as minimal space occupied on the graphics sheet. It represents a simple solution for a complex problem in the field.

### SHORT DESCRIPTION OF THE DRAWINGS

The invention will be explained in more detail with reference to the drawing, where
FIG. 1 illustrates a prior art system which also is a basis for the invention;
FIG. 2 illustrates a fiducial a) without and b) with specific exemplary dimensions;
FIG. 3 illustrates an image of a fiducial on a sheet in a) low magnification and b) high magnification, and c) in high magnification and turned 45 degrees relatively to orientation of the CCD camera chip;
FIG. 4 is an image of a bar code images with the same camera as used for FIG. 3;
FIG. 5 shows a) a photo of the work plane, b) a drawing of fiducials in different sizes, c) an enlarged part of the photo of the work plane, d) a photo of various fiducials in a 45 degree turned orientation, and e) d) a photo of various fiducials in a 90 degree turned orientation.

### DETAILED DESCRIPTION / PREFERRED EMBODIMENT

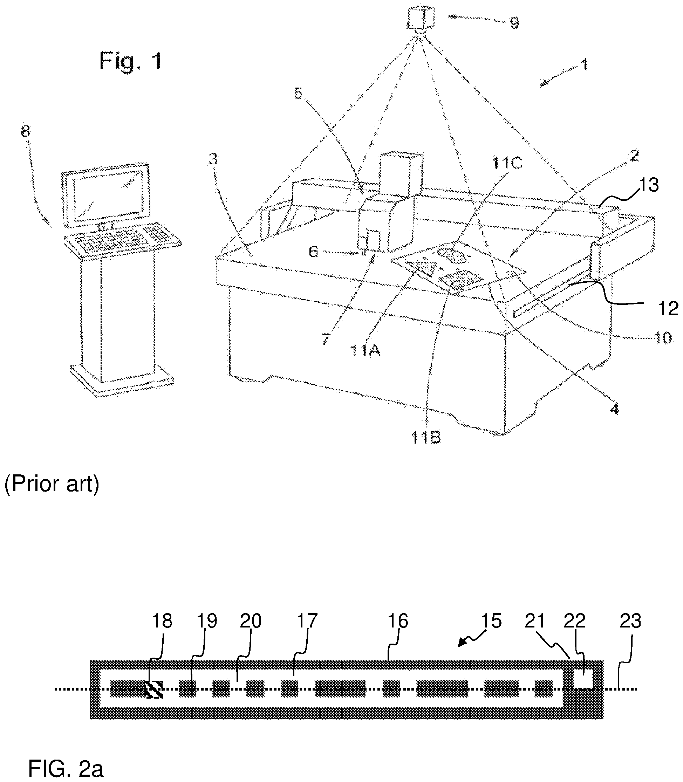

With reference to FIG. 1, European patent EP2488333B1 discloses an apparatus 1 with a double camera system on a flatbed cutting machine, where a first, stationary camera 9 gives an overview of the upper surface 3 of the work plane 2 on the flatbed cutting machine, and a second, mobile camera 7 is used for more precise determination of the location and orientation of the articles, for example graphics sheets 4, that are placed on the work plane 2 for cutting. A portal structure, arranged above the work plane 2, carries a mobile operation group 5 that contains the mobile camera 7 and a cutting member 6. The operation group 5 is mounted mobile on a bar that is suspended on guide rails parallel with the work plane 2 for cutting the sheet 4 along predetermined paths under computer control. For recognition of the cutting path, the graphics sheet 4 is provided with numerous crosses that are readily recognised as characteristic marks by the stationary camera 9. Alternatively, the geometrical characteristics of the graphics 11A, 11B, 11C are recognised.

This prior art system forms the basis for the improvements by the invention as explained in the following. For some embodiments of the invention, a similar machine is used, which will be explained in the following, emphasizing the differences to the prior art system. As the invention is based on a similar machine as in FIG. 1, it is explained with reference to FIG. 1, which is equally valid for the invention, followed by further figures which are characteristic for the invention.

Main differences of the invention relatively to the prior art system in FIG. 1 is the use of a specific modification of the graphics sheet 4 and special programming of the computer system as well as special use of the computer system and the camera system for determining identification of the graphics sheet and, optionally, also orientation and position of the graphics sheet.

The mobile camera 7 is optional, as will be explained in more detail below. Thus, in some embodiments, the second, mobile camera 7 on the operation group 5 is not used for identification of the graphics sheet, or is not used at all, why also in some embodiments, the operation group 5 does not comprise a camera.

With further reference to FIG. 1, in connection with the invention, the machine 1 comprises a flatbed cutter with a work plane 2 having an upper surface 3 for placing sheets 4 on the work plane 2. The work plane is the plane that is used for cutting graphics. For example, the sheets 4 are graphics sheets, which are sheets with graphics 11A, 11B, 11C printed thereon, typically printed only on one side. The typical material for the sheet is paper or cardboard, however, the invention applies equally well for textiles and leather articles.

A mobile frame structure, which is arranged above the work plane 2, carries a mobile operation group 5 that contains a cutting member 6, and optionally a mobile camera 7. The frame structure comprises a bar 13 that is suspended on guide rails 12 above the work plane 2 for translation of the bar 13 in along the guide rails 12 parallel to the work plane 2. The bar 13 carries the operation group 5, which is mounted on the bar 12 and movable parallel to the work plane 2 in a direction perpendicular to the guide rails 13. By cooperating movement of the bar 13 in the rails 12 and the operation group 5 long the bar 13, any curve can be cut by the cutting member in a sheet 4 on the work plane 2. The cutting of the sheet 4 is performed along predetermined paths under control of a computer 8.

In case that the first camera is a stationary camera 9, it is used to capture a photo of the entire work plane 2. Alternatively, the stationary camera 9 captures a part of the work plane, and a plurality of stationary cameras is used for covering the entire work plane 2. In this case, the multiple photos captured by the multiple stationary cameras are used instead of the single photo. As a further alternative when the first camera 9 is not configured to capture the entire work plane 2, the first camera 9 is not stationary but movable, for example translational in a direction parallel with the work plane 2, or it is rotational in order to tilt the camera into different orientations. In the latter case, the camera is advantageously provided with zoom optics in order to capture selected parts of the graphics, fiducial and other potential markers on the graphics sheet with higher magnification and optical resolution.

In operation, the apparatus works as follows.

The image captured by the first camera 9 is sent as a digital data sequence from the first camera 9 to the computer 8. The computer 8 uses computer vision software to analyse the image with respect to identification characteristics and compares the received image data with stored data from a database and, as far as available, selects a set of stored digital data for the cutting curve as relating to this particular sheet on the digital image. Once, the sheet 4 is identified, the graphics 11A, 11B, 11C are identified by the computer, and a corresponding cutting curve is determined. For a proper cutting, the position and the orientation of the graphics on the sheet are also determined.

As mentioned, optionally, a mobile camera 7 is, optionally, employed as well. As illustrated in FIG. 1, the first, stationary camera 9 is arranged at a larger distance to the work plane, relatively to the optional, second, mobile camera 7. The closer mobile camera is used for higher spatial resolution when determining the cutting curve, especially when the cutting curve is adjusted to compensate for possible distortion of the graphics on the sheet 4. How this distortion compensation is done is explained in US6772661. Once the position and orientation of the graphics on the sheet are determined as well as the theoretical predetermined cutting curve, the mobile camera 7 is used to read the position and orientation of the graphics 11A, 11B, 11C with a higher precision than the stationary camera. Optionally, the sheet 4 contains markers at and/or around the graphics, where the markers are read by the mobile camera 7. The readings are used for calculating a precise cutting curve that compensates for possible distortion of the graphics on the sheet 4.

In order to determine the position and orientation of the graphics 11a, 11B, 11C on the sheet 4 as well as identifying the graphics relatively to stored data in the computer system, fiducials are used, which are printed on the sheet 4. These fiducials are different from the crosses disclosed in EP2488333B1 and have a number of advantages as explained in the following.

In relation to such fiducials, for example a QR code or a fiducial as described below, the computer system 8 is programmed to analyse the received digital images with respect to image data resembling characteristics for a fiducial. The fiducial comprises an optically readable two-dimensional code for a numeric or alphanumeric sequence. When a printed sheet 4 is placed on the work plane 2, the printed sheet 4 comprising the fiducial on its upper side, an image of the sheet 4 is provided by the first camera 9 while the sheet 4 is on the work plane 2. By the computer system, 8 the image is received and analysed digitally and the fiducial found in the image. The two-dimensional code is determined and decoded by the computer 8 to extract an ID code that identifies the graphics on the sheet 4 and that differentiates it from other sheets with different graphics. The computer accesses a digital database and extracts stored data uniquely related to the extracted ID code for determining a cutting curve for the graphics on the basis of the extracted stored data. The cutting curve is specific for the ID code, and the computer submits instructions to the machine for moving the operating group 5 with the cutting element 6 along the work plane 2 for cutting the sheet 4 along the cutting curve.

FIG. 2a shows an example of a useful fiducial 15. The fiducial 15 is rectangular and comprises an elongated black frame 16 inside which there is provided an elongated concentric white frame 17, both frames 16, 17 being symmetrical about a central line 23. Inside the white frame 17, there is provided an optically readable two-dimensional code for a numeric or alphanumeric sequence, which is an array of a plurality of binary fields 18 with identical size, where each of the binary fields 18 is either a black field 19 or a white field 20. The black fields 19 and white fields 20 resemble digital codes for either 0 or 1, respectively. In order to indicate a direction for reading, one end of the frame 16 has a specific orientation mark 21, with a white field 22 that is offset from a longitudinal centre line 23. Advantageously, as in the shown fiducial 15, the dimensions of the offset mark 22 are identical or approximately identical of the binary fields 18.

The array of binary fields 18 has a similar function as a bar code, in as much as it is also a one-dimensionally readable array. However, the array of binary fields 18 is simpler and easier to read than bar codes, especially when being photographed, which will be explained in more detail in the following. As bar codes have different widths and distances of the bars, necessitated by the variety of digits 0-9 represented by the various bar combinations, a proper reading of the bar codes by a camera requires the camera to have an optical resolution that fits the distance between thinnest adjacent bars of the bar code. For the stationary camera 9 provided above the work plane 2 such that the entire work plane is imaged, this requires either a digital imaging chip with a very high number of pixels or a large barcode on the graphics. Both are disadvantageous. A CCD (charge coupled device) chip with large number of pixels is relatively expensive and requires large data storage capacity as well as extensive calculation power, which increases the production costs of the system and reduces computing speed. Large bar codes, in order to compensate for the coarse resolution of a CCD with low number of pixels, on the other hand, take up much space on the sheet 4, which is also not desired. Thus, bar codes are not useful as identification marks when used on graphics in connection flatbed cutters, unless the resolution of the camera is high, making the system expensive and demanding with respect to data analysis.

In contrast thereto, a fiducial as illustrated in FIG. 2a serves the purpose of, on the one hand, being relatively narrow such that it does not occupy a large space on the sheet, especially when placed at the edge of the sheet 4, and, on the other hand, having optimised dimensions for reading with a camera having a CCD chip with relatively few pixels. In addition, the fiducial 15 needs to be easily and clearly recognizable and differentiated from other graphics, the latter having various sizes and forms. Thus, the fiducial 15 is optimised for the specific purpose. The advantage stems from the fact that it is narrow but has relatively wide fields 18 along the longitude, indicated by a line 23 in FIG. 2a.

For example, the work plane has a size of 3.2 m times 3.2 m. For a stationary camera having a low-cost standard CCD chip with 5184 x 3456 pixels and imaging the entire work plane 2, each pixel corresponds to 0.6 mm x 0.9 mm. In order to differentiate between black and white, more than 2 pixels are necessary per binary field 18, for example 3 or 4 pixels. Thus, the binary field 18 should have a size of at least 2 or rather at least 3 mm. For example, is has a size in the range of 2 to 6 mm, optionally 3 to 5 mm, for example 4 mm.

Typically, the camera photo image on the CCD chip is distorted by the lens in front of the camera. This distortion is found especially pronounced in the edge regions of the image and is typically termed fish-eye effect. This is valid, especially, for low-cost optics. In order to compensate for this effect, corresponding software programs can be used. Thus, the camera has to be calibrated relatively to the work plane 2. For example, a sheet is loaded onto the work plane 2 with a check pattern or equidistant points all over the upper surface 3 of the work plane 2 and then imaged by the camera 9. Any distortion can then be compensated for through the software in the computer system 8. A size of the binary field 18 of 4 mm x 4 mm has been found to be a highly useful for relatively low-cost off-the-shelve cameras when used for work planes having a size in the range of 1.5 m to 4 m, for example a work plane with a size of 3.2 m x 3.2 m. The field size of 4 mm is a good compromise for, on the one hand, being large enough for imaging by off-the-shelf cameras with low-cost optics, and, on the other hand, for being small enough for slim fiducials 15.

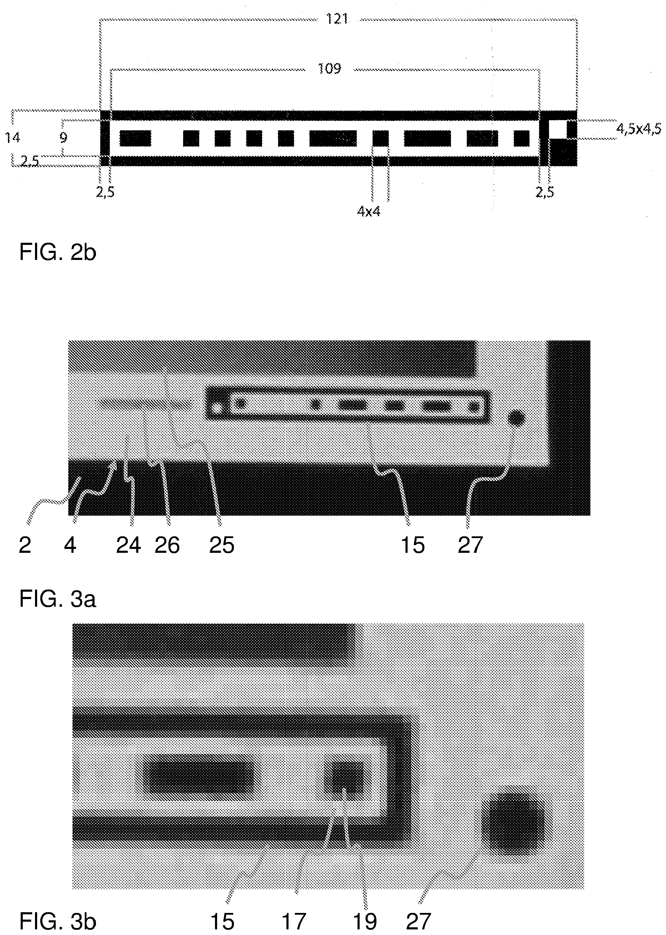

FIG. 2b illustrates an example of dimensions for a fiducial that has proven useful for the purpose. The binary fields 18 have a size of 4 mm x 4 mm, and the outer black frame 16 as well as the inner white frame 17 have a line thickness of 2.5 mm. At the end of the black outer frame 16, the orientation mark 22 is offset and only slightly larger than the binary fields 18.

In the present case, the binary fields 18 are all square in order to make the fiducial 15 as narrow as possible. However, the square form is not strictly necessary, but the widths of the fields 18 that are either black fields 19 or white fields 20 are identical along the central line 23, in contrast to bar codes in which the widths of the bars vary.

FIG. 3a shows part of an image taken with a digital camera having a CCD chip with 5184 x 3456 pixels covering a work plane 2 of about 3 m x 2 m, corresponding to an area element of 0.6 mm x 0.6 mm. The image shows an edge region 24 of a sheet 4 on a work plane 2. The edge region 24 surrounds a graphics region 25 on which there are provided graphics for cutting. The edge region 24 comprises a numerical code 26, which is not readable by the camera due to low resolution. The fiducial 15, however, is clearly recognizable as well as one of the reference markers 27 of which there are numerous around the graphics and which are used for adjusting the cutting curve to compensate for two-dimensional distortion of the graphics 25 on the sheet 4.

FIG. 3b is an enlarged part of the image of FIG. 3a. The pixels in the image are clearly discernible. It is seen that the dark field 19 and the surrounding white frame 17 are resolved with good contrast.

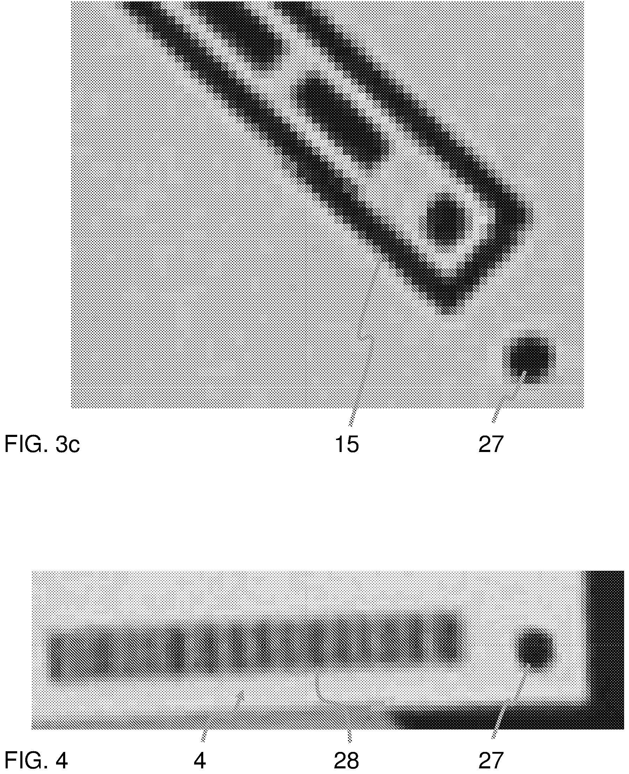

FIG. 3c is a part of a photo of the fiducial 15 and the marker 27 at an angle of about 45 degrees to the orientation of the camera chip. Also in this case, a sharp contrast is seen.

As illustrated in FIG. 4, a photo of a similar sized barcode 28 does not reveal the bars clearly due to a resolution that is too low. The bar code 28 would have to be enlarged multiple times on the graphics sheet in order to be read with sufficient optical resolution, which would take up much space on the sheet 4, leading to wasted space, which otherwise could have been used for graphics, instead. Alternatively, the resolution of the camera would have to be enhanced or multiple cameras to be used, both of which would increase the production and maintenance costs of the apparatus and increase the demand for storage and computing power.

For these reasons, typically, in prior art systems, bar codes on graphics are not used or are read by a separate barcode reader. Neither of which has the advantages of the system as described above.

As it appears from the above, the development of the specific fiducial 15 has been motivated by constraints with respect to practicability, low cost for production and maintenance, minimized data storage and computing speed and power as well as minimized space occupied by the fiducial on the sheet. It represents a simple solution for a complex problem in the field.

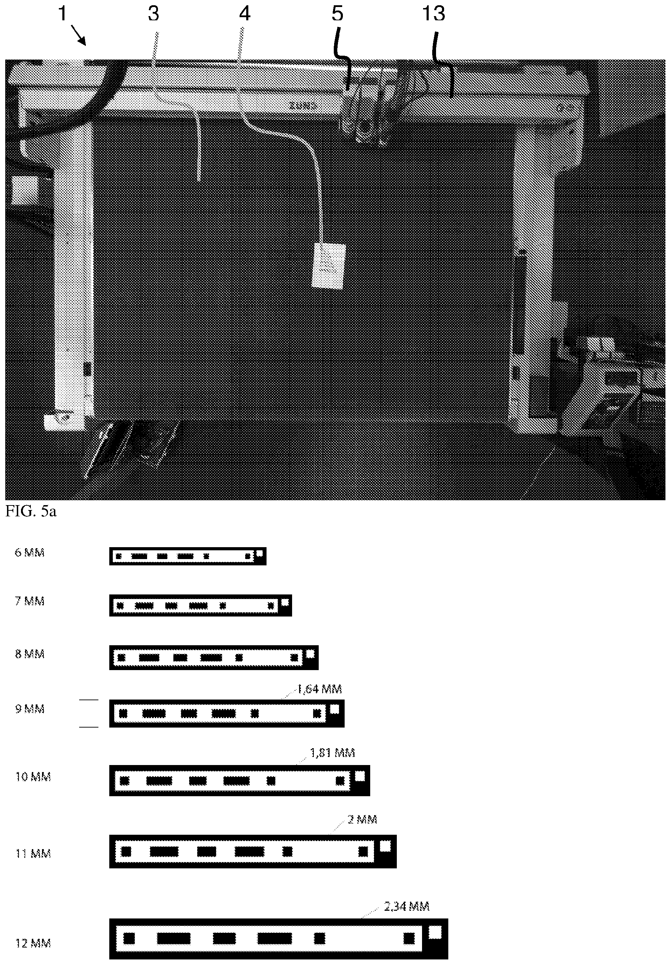

FIG. 5a is a photo of an apparatus 1 with a flatbed cutting machine similar to the one that is illustrated in FIG. 1, with a working plane 3 over which an operating group 5 is movable on a bar 13 which in itself is movable in the transverse direction. On the working plane, a sheet 4 is placed. The photo is taken with a stationary camera located about 2.5 meter above the working plane 3. The stationary camera 9 is the same as described in relation to FIG. 3.

FIG. 5b is an illustration of the sheet 4 that is placed on the work plane of FIG. 5a. The dimensions in mm are stated to the left of each of the differently sized fiducials, the width varying from 6 mm to 12 mm in width. As one area element is 0.6 mm x 0.6 mm, the smallest fiducials would not be expected resolved by the system.

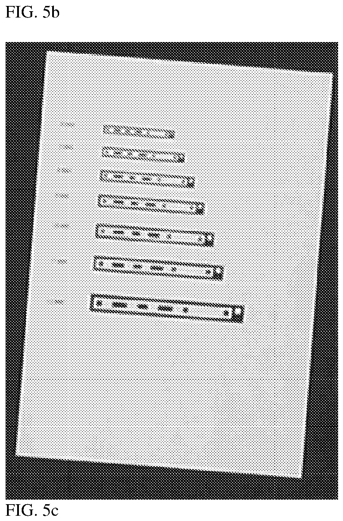

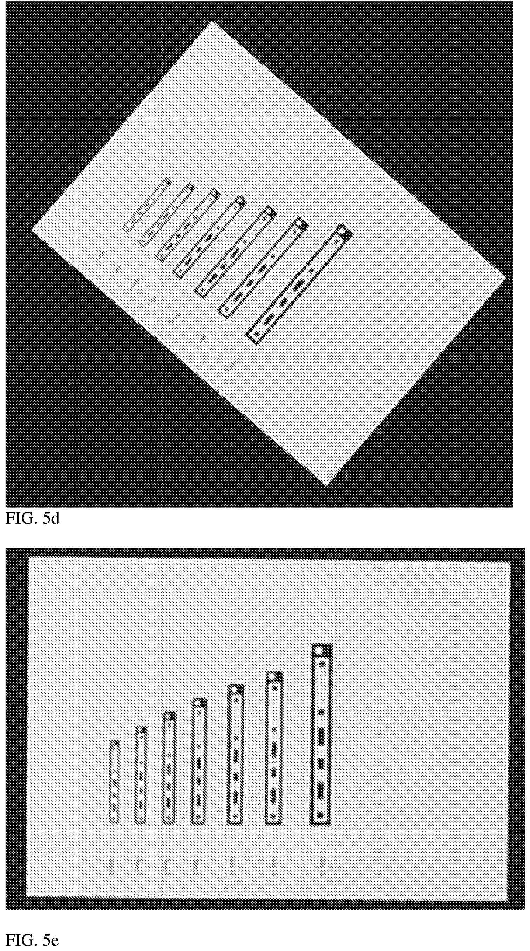

FIG. 5c illustrates a magnified part of the photo of FIG. 5a. FIG. 5d and 5e show similar photos for sheets rotated 45 degrees and 90 degrees on the work plane. Surprisingly, even the smallest of the fiducials is visible to a degree that resembles its structure. Although, a size of at least 9 mm is preferred due to high reading certainty, it demonstrates the optical robustness of the system and method for such type of fiducial even if at the limit of the optical resolution. Especially, it is pointed out in proof, that the width of only 6 mm of the smallest fiducial only leaves 10 area elements across the fiducial. Despite of these few area elements, the black frame, the white frame inside the black frame and the fields are clearly visible, despite only two area elements covering the black frame.

## Claims

1. A method of operating an apparatus for cutting printed sheets (4), the apparatus (1) comprising a flatbed cutting machine, which comprises a work plane (2) with an upper surface (3) for receiving the printed sheets (4) thereon; the apparatus (1) comprising a first camera (9) arranged over the work plane (2) at a first distance above the work plane (2) and configured for imaging part of the upper surface (3) or the entire upper surface (3) of the work plane (2); the apparatus (1) further comprising an operating group (5) mobile along the work plane (2) at a second distance from the work plane (2), and the operating group (5) comprising a cutting member (6) mobile together with the operating group (5) for cutting the sheets (4) when placed on the work plane (2); wherein the first distance is larger than the second distance, and the camera (9) is provided remote and free from the operating group (5) for preventing mechanical collision between the operating group (5) and the first camera (9) when the operating group (5) is moving along the work plane (2); the apparatus (1) further comprising a computer system (8) functionally connected to the first camera (9) and configured for receiving digital images from the first camera (9); **characterised in that** the computer system (8) is programmed to analyse the received digital images with respect to image data resembling characteristics for a fiducial (15); the fiducial (15) comprising an optically readable two-dimensional code for a numeric or alphanumeric sequence; the method comprising placing a printed sheet (4) on the work plane (2), the printed sheet (4) comprising the fiducial (15) on its upper side, providing an image of the sheet (4) by the first camera (9) while the sheet (4) is on the work plane (2); by the computer system, (8) receiving and analysing the image and finding the fiducial (15) in the image, and determining and decoding the two-dimensional code to extract an ID code that identifies the graphics on the sheet (4) and that differentiates it from other sheets with different graphics; by the computer accessing a digital database and extracting stored data uniquely related to the extracted ID code and determining a cutting curve for the graphics on the basis of the extracted stored data, the cutting curve being specific for the ID code; submitting computer instructions to the machine for moving the operating group (5) with the cutting element (6) along the work plane (2) for cutting the sheet (4) along the cutting curve.

2. The method according to claim 1, wherein the extracted stored data comprise computer readable information about the position and orientation of the fiducial (15) relatively to the graphics (11A, 11B, 11C) on the sheet (4); the method further comprising, by the computer system (8), determining the orientation and position of the fiducial (15) on the work plane (2) on the basis of the image of the fiducial (15) and determining the orientation and position of the graphics (11A, 11B, 11C) on the work plane (2) from the determined position and orientation of the fiducial (15) and the extracted stored data containing the position and orientation of the fiducial (15) relatively to the graphics (11A, 11B, 11C).

3. The method according to claim 1 or 2, wherein the operating group (5) further comprises a second camera (7), which is mobile along the work plane (2) as part of the operation group (5), the second camera being configured for imaging prints on the printed sheets (4); the method comprising providing a plurality of reference markers (27) distributed around the graphics on the sheet (4); from the stored data, on the basis of the ID code, extracting a first set of digital data that represent predetermined positions of the reference markers (27) on the sheet (4); under control of the computer system (8) moving the second camera (7) along the work plane to the predetermined positions and imaging the areas around the actual reference markers (27) on the sheet (4) and analysing the images for detecting actual positions of the reference markers (27); by the computer system (8) comparing the actual positions with the predetermined positions of the reference markers (27), and in case of deviations, adjusting the cutting curve to compensate for the deviations and performing precise computer-controlled cutting of the graphics despite two-dimensional distortions of the graphics on the sheet (4).

4. The method according to claim 3, wherein the first camera (9) is imaging a larger area of the upper surface (3) with a lower resolution than the second camera (7).

5. The method according to claim 1 or 2, the method further comprising, providing a plurality of reference markers (27) that are distributed around the graphics on the sheet (4); from the stored data, on the basis of the ID code, extracting a first set of digital data that represent predetermined positions of the reference markers (27) on the sheet (4); by the computer system (8) receiving the image of the sheet as taken by the first camera (9) and automatically analysing the image with respect to actual positions of the reference markers (27) on the sheet (4), comparing the actual positions with the predetermined positions of the reference markers, and in case of deviations, adjusting the cutting curve to compensate for the deviations and performing precise computer-controlled cutting of the graphics despite two-dimensional distortions of the graphics on the sheet (4).

6. The method according to claim 5, wherein the method comprises adjusting the cutting curves by the computer system (8) on the basis of images only received from the first camera (9).

7. The method according to any preceding claim, wherein the first camera (9) is a stationary camera that is imaging the entire upper surface (3) of the work plane (2).

8. The method according to any preceding claim, wherein the method comprises providing the fiducial (15) with a printed rectangular or square frame (16) in addition to an orientation marker (22) that uniquely indicates a reading direction of the code (18) relatively to the frame (16), the frame being provided around the optically readable two-dimensional code (18) or being part of it, wherein the method comprises locating the frame in the image by the computer, identifying the orientation marker (21), determining the orientation and position of the fiducial (15) on the upper surface (3) from the frame and the orientation marker (21).

9. The method according to any preceding claim, wherein the digital images having pixels, each pixel representing an area element on the work plane (2); wherein the method comprises selecting the camera chip resolution and the optics as well as the distance of the first camera (9) to the upper surface (3) of the work plane (3) such that the size of an area element is in the range of 0.5 to 1 mm.

10. The method according to any preceding claim, the fiducial (15) comprising a rectangular dark frame (16) having a thickness in the range of 1-3 mm and inside which there is provided a consecutive array of identical fields (18) along a straight line (23), each of the identical fields (18) either being a dark field (19) or a bright field (20) or fields (18, 19) in two different predetermined colours; each field (18) having a size along the straight line (23), the size along the straight line (23) being in the range of 2 to 6 mm.

11. The method according to claim 10, wherein the fiducial (15) is rectangular with a longitude and a length of 121 mm and a width of 14 mm, and with an inner frame (17) inside an outer frame (16), the outer frame (16) being a dark frame and the inner frame being a light frame, or the outer and inner frame having two different predetermined colours; the outer frame having a thickness of 2.5 mm and the inner frame having a thickness of 2.5 mm, wherein the number of binary fields inside the outer frame (17) and inner frame (16) is between 20 and 40, wherein each binary field (18) is a square of 4 mm; wherein at one end of the fiducial (15), the fiducial (15) comprises an orientation mark (21), the orientation mark (21) comprising a square (22) offset from a central line (23) that extends centrally along the longitude of the fiducial (15), the square being light on a dark background or having a different predetermined colour than the background around the square.

12. An apparatus for a method according to any one of the claims 1-11, the apparatus (1) comprising a flatbed cutting machine, which comprises a work plane (2) with an upper surface (3) for receiving a printed sheet (4) thereon; the apparatus (1) comprising a first camera (9) arranged over the work plane (2) at a first distance above the work plane (2) and configured for imaging part of the upper surface or the entire upper surface of the work plane (2); the apparatus (1) further comprising an operating group (5) mobile along the work plane (2) at a second distance from the work plane (2), and the operating group (5) comprising a cutting member (6) mobile together with the operating group (5) for cutting the sheet (4) when placed on the work plane (2); wherein the first distance is larger than the second distance, and the camera (9) is provided remote and free from the operating group (5) for preventing mechanical collision between the operating group (5) and the first camera (9) when the operating group (5) is moving along the work plane (2); the apparatus (1) further comprising a computer system (8) functionally connected to the first camera (9) and configured for receiving digital images from the first camera (9); **characterised in that** the computer system (8) is programmed to analyse the received digital images from the first camera (9) with respect to image data resembling characteristics for a fiducial (15); the fiducial (15) comprising an optically readable two-dimensional code for a numeric or alphanumeric sequence, the apparatus (1) being configured for providing an image of the sheet (4) by the first camera (9) while the sheet (4) is on the work plane (2); the computer system (8) being programmed for receiving and analysing the image of the sheet (4) and finding the fiducial (15) in the image, determining and decoding the two-dimensional code to extract an ID code that identifies the graphics on the sheet (4) and differentiates it from other sheets with different graphics; the computer being programmed for accessing a digital database and extracting stored data uniquely related to the extracted ID code and for determining a cutting curve for the graphics on the basis of the stored data, the cutting curve being specific for the ID code; the apparatus (1) further configured for submitting computer instructions to the machine for moving the operating group (5) with the cutting element (6) along the work plane (2) for cutting the sheet (4) along the cutting curve.

13. The apparatus according to claim 12, wherein the extracted stored data comprise computer readable information about the position and orientation of the fiducial (15) relatively to the graphics (11A, 11B, 11C) on the sheet (4), wherein the computer system (8) is configured for determining the orientation and position of the fiducial (15) on the work plane (2) on the basis of the image of the fiducial (15), and determining the orientation and position of the graphics (11A, 11B, 11C) on the work plane (2) from the determined position and orientation of the fiducial (15) and the extracted stored data containing the position and orientation of the fiducial (15) relatively to the graphics (11A, 11B, 11C).

14. The apparatus according to claim 12 or 13, wherein the computer system is configured for extracting a first set of digital data from the extracted stored data, the first set of digital data representing predetermined positions of reference markers (27) that are distributed around the graphics on the sheet (4); the computer system (8) being further programmed for receiving the image of the sheet as taken by the first camera (9) and automatically analysing the image with respect to actual positions of the reference markers (27), comparing the actual positions with the predetermined positions of the reference markers, and in case of deviations, adjusting the cutting curve to compensate for the deviations and performing precise computer-controlled cutting of the graphics despite two-dimensional distortions of the graphics on the sheet (4).

15. The apparatus according to claim 14, wherein computer system is configured for adjusting the cutting curves by the computer system on the basis of images only received from the first camera (9).

16. The apparatus according to claim 14 or 15, wherein the operating group (5) further comprises a second camera (7), which is mobile along the work plane (2) as part of the operation group (5), the second camera being configured for imaging prints on the printed sheets (4); wherein the computer system (8) is configured for extracting a first set of digital data from the extracted stored data, the first set of digital data representing predetermined positions of reference markers (27) that are distributed around the graphics on the sheet (4); the apparatus (1) being further configured for computer controlled movement of the second camera (7) along the work plane (2) to the predetermined positions for imaging areas around the reference markers (27) and analysing the images for detecting actual positions of the reference markers (27); the apparatus (1) further configured for computerised comparison of the actual positions with the predetermined positions of the reference markers (27), and in case of deviations, adjustment the cutting curve in accordance with the deviations for precise cutting despite two-dimensional distortions of the graphics on the sheet (4).

17. The apparatus according to claim 16, wherein the first camera (9) is configured for imaging a larger area of the upper surface with a lower resolution than the second camera (7).

18. The apparatus according to any one of the claims 12-17, wherein the first camera (9) is a stationary camera that is imaging the entire upper surface (3) of the work plane (2).

## Patentansprüche

1. Verfahren zum Betreiben einer Vorrichtung zum Schneiden von gedruckten Bögen (4), wobei die Vorrichtung (1) eine Flachbettschneidemaschine umfasst, die eine Arbeitsebene (2) mit einer oberen Oberfläche (3) zum Aufnehmen der gedruckten Bögen (4) darauf umfasst; wobei die Vorrichtung (1) eine erste Kamera (9) umfasst, die über der Arbeitsebene (2) in einem ersten Abstand über der Arbeitsebene (2) angeordnet und konfiguriert ist, um Teil der oberen Oberfläche (3) oder die gesamte obere Oberfläche (3) der Arbeitsebene (2) abzubilden; wobei die Vorrichtung (1) ferner eine Betriebsgruppe (5) umfasst, die entlang der Arbeitsebene (2) in einem zweiten Abstand von der Arbeitsebene (2) beweglich ist, und die Betriebsgruppe (5) ein Schneideelement (6) umfasst, das zusammen mit der Betriebsgruppe (5) beweglich ist, um die Bögen (4) zu schneiden, wenn sie auf der Arbeitsebene (2) platziert sind; wobei der erste Abstand größer als der zweite Abstand ist, und die Kamera (9) entfernt und frei von der Betriebsgruppe (5) bereitgestellt ist, um mechanische Kollision zwischen der Betriebsgruppe (5) und der ersten Kamera (9) zu verhindern, wenn sich die Betriebsgruppe (5) entlang der Arbeitsebene (2) bewegt; wobei die Vorrichtung (1) ferner ein Computersystem (8) umfasst, das funktionell mit der ersten Kamera (9) verbunden und konfiguriert ist, um digitale Bilder von der ersten Kamera (9) zu empfangen; **dadurch gekennzeichnet, dass** das Computersystem (8) programmiert ist, um die empfangenen digitalen Bilder in Bezug auf Bilddaten zu analysieren, die Eigenschaften für einen Marker (15) ähneln; wobei der Marker (15) einen optisch lesbaren zweidimensionalen Code für eine numerische oder alphanumerische Sequenz umfasst; wobei das Verfahren das Platzieren eines gedruckten Bogens (4) auf der Arbeitsebene (2) umfasst, wobei der gedruckte Bogen (4) den Marker (15) auf seiner oberen Seite umfasst, wodurch ein Bild des Bogens (4) durch die erste Kamera (9) bereitgestellt wird, während der Bogen (4) auf der Arbeitsebene (2) ist; durch das Computersystem (8), Empfangen und Analysieren des Bildes und Finden des Markers (15) in dem Bild und Bestimmen und Decodieren des zweidimensionalen Codes, um einen ID-Code zu extrahieren, der die Graphik auf dem Bogen (4) identifiziert und der ihn von anderen Bögen mit unterschiedlichen Graphiken unterscheidet; durch den Computer, Zugreifen auf eine digitale Datenbank und Extrahieren von gespeicherten Daten, die sich einzig auf den extrahierten ID-Code beziehen und Bestimmen einer Schnittkurve für die Graphik auf der Basis der extrahierten gespeicherten Daten, wobei die Schnittkurve spezifisch für den ID-Code ist; Einreichen von Computeranweisungen an die Maschine, um die Betriebsgruppe (5) mit dem Schneideelement (6) entlang der Arbeitsebene (2) zu bewegen, um den Bogen (4) entlang der Schnittkurve zu schneiden.

2. Verfahren nach Anspruch 1, wobei die extrahierten gespeicherten Daten computerlesbare Informationen über die Position und Ausrichtung des Markers (15) relativ zu der Graphik (11A, 11B, 11C) auf dem Bogen (4) umfassen; wobei das Verfahren ferner, durch das Computersystem (8), das Bestimmen der Ausrichtung und Position des Markers (15) auf der Arbeitsebene (2) auf der Basis des Bildes des Markers (15) und das Bestimmen der Ausrichtung und Position der Graphik (11A, 11B, 11C) auf der Arbeitsebene (2) anhand der bestimmten Position und Ausrichtung des Markers (15) und der extrahierten gespeicherten Daten umfasst, welche die Position und Ausrichtung des Markers (15) relativ zu der Graphik (11A, 11B, 11C) enthalten.

3. Verfahren nach Anspruch 1 oder 2, wobei die Betriebsgruppe (5) ferner eine zweite Kamera (7) umfasst, die entlang der Arbeitsebene (2) als Teil der Betriebsgruppe (5) beweglich ist, wobei die zweite Kamera konfiguriert ist, um Drücke auf den gedruckten Bögen (4) abzubilden; wobei das Verfahren das Bereitstellen einer Vielzahl von Referenzmarkern (27) umfasst, die um die Graphik auf dem Bogen (4) verteilt sind; aus den gespeicherten Daten, auf der Basis des ID-Codes, Extrahieren eines ersten Satzes von digitalen Daten, die vorbestimmte Positionen der Referenzmarker (27) auf dem Bogen (4) darstellen; unter Steuerung des Computersystems (8), Bewegen der zweiten Kamera (7) entlang der Arbeitsebene zu den vorbestimmten Positionen und Abbilden der Bereiche um die tatsächlichen Referenzmarker (27) auf dem Bogen (4) und Analysieren der Bilder zum Erfassen von tatsächlichen Positionen der Referenzmarker (27); durch das Computersystem (8), Vergleichen der tatsächlichen Positionen mit den vorbestimmten Positionen der Referenzmarker (27), und im Fall von Abweichungen, Einstellen der Schnittkurve, um die Abweichungen zu kompensieren und Durchführen von präzisem computergesteuertem Schneiden der Graphik trotz zweidimensionaler Verzerrungen der Graphik auf dem Bogen (4).

4. Verfahren nach Anspruch 3, wobei die erste Kamera (9) einen größeren Bereich der oberen Oberfläche (3) mit einer geringeren Auflösung als die zweite Kamera (7) abbildet.

5. Verfahren nach Anspruch 1 oder 2, wobei das Verfahren ferner das Bereitstellen einer Vielzahl von Referenzmarkern (27) umfasst, die um die Graphik auf dem Bogen (4) verteilt sind; anhand der gespeicherten Daten, auf der Basis des ID-Codes, Extrahieren eines ersten Satzes von digitalen Daten, die vorbestimmte Positionen der Referenzmarker (27) auf dem Bogen (4) darstellen; durch das Computersystem (8), Empfangen des Bildes des Bogens wie durch die erste Kamera (9) gemacht und automatisches Analysieren des Bildes in Bezug auf tatsächliche Positionen der Referenzmarker (27) auf dem Bogen (4), Vergleichen der tatsächlichen Positionen mit den vorbestimmten Positionen der Referenzmarker, und im Fall von Abweichungen, Einstellen der Schnittkurve, um die Abweichungen zu kompensieren und Durchführen von präzisem computergesteuertem Schneiden der Graphik trotz zweidimensionaler Verzerrungen der Graphik auf dem Bogen (4).

6. Verfahren nach Anspruch 5, wobei das Verfahren das Einstellen der Schnittkurven durch das Computersystem (8) auf der Basis von Bildern umfasst, die nur von der ersten Kamera (9) empfangen werden.

7. Verfahren nach einem vorhergehenden Anspruch, wobei die erste Kamera (9) eine stationäre Kamera ist, welche die gesamte obere Oberfläche (3) der Arbeitsebene (2) abbildet.

8. Verfahren nach einem vorhergehenden Anspruch, wobei das Verfahren das Bereitstellen des Markers (15) mit einem gedruckten rechteckigen oder quadratischen Rahmen (16) zusätzlich zu einem Ausrichtungsmarker (22) umfasst, der einzig eine Leserichtung des Codes (18) relativ zu dem Rahmen (16) angibt, wobei der Rahmen um den optisch lesbaren zweidimensionalen Code (18) bereitgestellt ist oder Teil davon ist, wobei das Verfahren das Lokalisieren des Rahmens in dem Bild durch den Computer, das Identifizieren des Ausrichtungsmarkers (21), das Bestimmen der Ausrichtung und Position des Markers (15) auf der oberen Oberfläche (3) von dem Rahmen und dem Ausrichtungsmarker (21) umfasst.

9. Verfahren nach einem vorhergehenden Anspruch, wobei die digitalen Bilder Pixel aufweisen, wobei jedes Pixel ein Bereichselement auf der Arbeitsebene (2) darstellt; wobei das Verfahren das Auswählen der Kamerachipauflösung und der Optik sowie des Abstands der ersten Kamera (9) zu der oberen Oberfläche (3) der Arbeitsebene (3) umfasst, sodass die Größe eines Bereichselements in dem Bereich von 0,5 bis 1 mm ist.

10. Verfahren nach einem vorhergehenden Anspruch, wobei der Marker (15) einen rechteckigen dunklen Rahmen (16) umfasst, der eine Dicke in dem Bereich von 1-3 mm aufweist und in dem eine aufeinanderfolgende Reihe an identischen Feldern (18) entlang einer geraden Linie (23) bereitgestellt ist, wobei jedes der identischen Felder (18) entweder ein dunkles Feld (19) oder ein helles Feld (20) oder Felder (18, 19) in zwei unterschiedlichen vorbestimmten Farben ist; wobei jedes Feld (18) eine Größe entlang der geraden Linie (23) aufweist, wobei die Größe entlang der geraden Linie (23) in dem Bereich von 2 bis 6 mm ist.

11. Verfahren nach Anspruch 10, wobei der Marker (15) rechteckig mit einer Longitude und einer Länge von 121 mm und einer Breite von 14 mm ist, und mit einem inneren Rahmen (17) innerhalb eines äußeren Rahmens (16), wobei der äußere Rahmen (16) ein dunkler Rahmen ist und der innere Rahmen ein heller Rahmen ist, oder der äußere und der innere Rahmen zwei unterschiedliche vorbestimmte Farben aufweisen; wobei der äußere Rahmen eine Dicke von 2,5 mm aufweist und der innere Rahmen eine Dicke von 2,5 mm aufweist, wobei die Anzahl an binären Feldern innerhalb des äußeren Rahmens (17) und des inneren Rahmens (16) zwischen 20 und 40 ist, wobei jedes binäre Feld (18) ein Quadrat von 4 mm ist; wobei an einem Ende des Markers (15) der Marker (15) eine Ausrichtungsmarke (21) umfasst, wobei die Ausrichtungsmarke (21) ein Quadrat (22) umfasst, das von einer Mittellinie (23) versetzt ist, die sich mittig entlang der Longitude des Markers (15) erstreckt, wobei das Quadrat hell auf einem dunklen Hintergrund ist oder eine andere vorbestimmte Farbe als der Hintergrund um das Quadrat aufweist.

12. Vorrichtung für ein Verfahren nach einem der Ansprüche 1-11, wobei die Vorrichtung (1) eine Flachbettschneidemaschine umfasst, die eine Arbeitsebene (2) mit einer oberen Oberfläche (3) zum Aufnehmen eines gedruckten Bogens (4) darauf umfasst; wobei die Vorrichtung (1) eine erste Kamera (9) umfasst, die über der Arbeitsebene (2) in einem ersten Abstand über der Arbeitsebene (2) angeordnet und konfiguriert ist, um Teil der oberen Oberfläche oder der gesamten oberen Oberfläche der Arbeitsebene (2) abzubilden; wobei die Vorrichtung (1) ferner eine Betriebsgruppe (5) umfasst, die entlang der Arbeitsebene (2) in einem zweiten Abstand von der Arbeitsebene (2) beweglich ist, und die Betriebsgruppe (5) ein Schneideelement (6) umfasst, das zusammen mit der Betriebsgruppe (5) beweglich ist, um den Bogen (4) zu schneiden, wenn er auf der Arbeitsebene (2) platziert ist; wobei der erste Abstand größer als der zweite Abstand ist, und die Kamera (9) entfernt und frei von der Betriebsgruppe (5) bereitgestellt ist, um mechanische Kollision zwischen der Betriebsgruppe (5) und der ersten Kamera (9) zu verhindern, wenn sich die Betriebsgruppe (5) entlang der Arbeitsebene (2) bewegt; wobei die Vorrichtung (1) ferner ein Computersystem (8) umfasst, das funktionell mit der ersten Kamera (9) verbunden und konfiguriert ist, um digitale Bilder von der ersten Kamera (9) zu empfangen; **dadurch gekennzeichnet, dass** das Computersystem (8) programmiert ist, um die empfangenen digitalen Bilder von der ersten Kamera (9) in Bezug auf Bilddaten zu analysieren, die Eigenschaften für einen Marker (15) ähneln; wobei der Marker (15) einen optisch lesbaren zweidimensionalen Code für eine numerische oder alphanumerische Sequenz umfasst, wobei die Vorrichtung (1) konfiguriert ist, um ein Bild des Bogens (4) durch die erste Kamera (9) bereitzustellen, während der Bogen (4) auf der Arbeitsebene (2) ist; wobei das Computersystem (8) programmiert ist, um das Bild des Bogens (4) zu empfangen und zu analysieren und den Marker (15) in dem Bild zu finden, den zweidimensionalen Code zu bestimmen und zu decodieren, um einen ID-Code zu extrahieren, der die Graphik auf dem Bogen (4) identifiziert und ihn von anderen Bögen mit anderen Graphiken unterscheidet; wobei der Computer programmiert ist, um auf eine digitale Datenbank zuzugreifen und gespeicherte Daten zu extrahieren, die sich einzig auf den extrahierten ID-Code beziehen und um eine Schnittkurve für die Graphik auf der Basis der gespeicherten Daten zu bestimmen, wobei die Schnittkurve spezifisch für den ID-Code ist; wobei die Vorrichtung (1) ferner konfiguriert ist, um Computeranweisungen bei der Maschine einzureichen, um die Betriebsgruppe (5) mit dem Schneideelement (6) entlang der Arbeitsebene (2) zu bewegen, um den Bogen (4) entlang der Schnittkurve zu schneiden.

13. Vorrichtung nach Anspruch 12, wobei die extrahierten gespeicherten Daten computerlesbare Informationen über die Position und Ausrichtung des Markers (15) relativ zu der Graphik (11A, 11B, 11C) auf dem Bogen (4) umfassen, wobei das Computersystem (8) konfiguriert ist, um die Ausrichtung und Position des Markers (15) auf der Arbeitsebene (2) auf der Basis des Bildes des Markers (15) zu bestimmen, und die Ausrichtung und Position der Graphik (11A, 11B, 11C) auf der Arbeitsebene (2) anhand der bestimmten Position und Ausrichtung des Markers (15) und der extrahierten gespeicherten Daten zu bestimmen, welche die Position und Ausrichtung des Markers (15) relativ zu der Graphik (11A, 11B, 11C) enthalten.

14. Vorrichtung nach Anspruch 12 oder 13, wobei das Computersystem konfiguriert ist, um einen ersten Satz von digitalen Daten aus den extrahierten gespeicherten Daten zu extrahieren, wobei der erste Satz von digitalen Daten vorbestimmte Positionen von Referenzmarkern (27) darstellt, die um die Graphik auf dem Bogen (4) verteilt sind; wobei das Computersystem (8) ferner programmiert ist, um das Bild des Bogens wie durch die erste Kamera (9) gemacht zu empfangen und das Bild in Bezug auf tatsächliche Positionen der Referenzmarker (27) automatisch zu analysieren, die tatsächlichen Positionen mit den vorbestimmten Positionen der Referenzmarker zu vergleichen, und im Fall von Abweichungen die Schnittkurve einzustellen, um die Abweichungen zu kompensieren und präzises computergesteuertes Schneiden der Graphik trotz zweidimensionaler Verzerrungen der Graphik auf dem Bogen (4) durchzuführen.

15. Vorrichtung nach Anspruch 14, wobei das Computersystem konfiguriert ist, um die Schnittkurven durch das Computersystem auf der Basis von Bildern einzustellen, die nur von der ersten Kamera (9) empfangen werden.

16. Vorrichtung nach Anspruch 14 oder 15, wobei die Betriebsgruppe (5) ferner eine zweite Kamera (7) umfasst, die entlang der Arbeitsebene (2) als Teil der Betriebsgruppe (5) beweglich ist, wobei die zweite Kamera konfiguriert ist, um Drücke auf den gedruckten Bögen (4) abzubilden; wobei das Computersystem (8) konfiguriert ist, um einen ersten Satz von digitalen Daten aus den extrahierten gespeicherten Daten zu extrahieren, wobei der erste Satz von digitalen Daten vorbestimmte Positionen von Referenzmarkern (27) darstellt, die um die Graphik auf dem Bogen (4) verteilt sind; wobei die Vorrichtung (1) ferner für computergesteuerte Bewegung der zweiten Kamera (7) entlang der Arbeitsebene (2) zu den vorbestimmten Positionen konfiguriert ist, um Bereiche um die Referenzmarker (27) abzubilden und die Bilder zu analysieren, um tatsächliche Positionen der Referenzmarker (27) zu erfassen; wobei die Vorrichtung (1) ferner für computerisierten Vergleich der tatsächlichen Positionen mit den vorbestimmten Positionen der Referenzmarker (27) konfiguriert ist, und im Fall von Abweichungen, Einstellung der Schnittkurve gemäß den Abweichungen für präzises Schneiden trotz zweidimensionaler Verzerrungen der Graphik auf dem Bogen (4) .

17. Vorrichtung nach Anspruch 16, wobei die erste Kamera (9) konfiguriert ist, um einen größeren Bereich der oberen Oberfläche mit einer geringeren Auflösung als die zweite Kamera (7) abzubilden.

18. Vorrichtung nach einem der Ansprüche 12-17, wobei die erste Kamera (9) eine stationäre Kamera ist, welche die gesamte obere Oberfläche (3) der Arbeitsebene (2) abbildet.

## Revendications

1. Procédé de fonctionnement d'un appareil pour découper des feuilles imprimées (4), l'appareil (1) comprenant une machine de découpe à plateau, qui comprend un plan de travail (2) avec une surface supérieure (3) pour recevoir les feuilles imprimées (4) dessus ; l'appareil (1) comprenant une première caméra (9) agencée sur le plan de travail (2) à une première distance au-dessus du plan de travail (2) et configurée pour imager une partie de la surface supérieure (3) ou la totalité de la surface supérieure (3) du plan de travail (2) ; l'appareil (1) comprenant en outre un groupe de fonctionnement (5) mobile le long du plan de travail (2) à une seconde distance du plan de travail (2), et le groupe de fonctionnement (5) comprenant un élément de découpe (6) mobile conjointement avec le groupe de fonctionnement (5) pour découper les feuilles (4) lorsqu'elles sont placées sur le plan de travail (2) ; dans lequel la première distance est plus grande que la seconde distance, et la caméra (9) est prévue à distance et libre du groupe de fonctionnement (5) pour empêcher une collision mécanique entre le groupe de fonctionnement (5) et la première caméra (9) lorsque le groupe de fonctionnement (5) se déplace le long du plan de travail (2) ; l'appareil (1) comprenant en outre un système informatique (8) connecté fonctionnellement à la première caméra (9) et configuré pour recevoir des images numériques depuis la première caméra (9) ; **caractérisé en ce que** le système informatique (8) est programmé pour analyser les images numériques reçues par rapport à des données d'image ressemblant à des caractéristiques pour un repère (15) ; le repère (15) comprenant un code bidimensionnel lisible optiquement pour une séquence numérique ou alphanumérique ; le procédé comprenant le placement d'une feuille imprimée (4) sur le plan de travail (2), la feuille imprimée (4) comprenant le repère (15) sur son côté supérieur, fournissant une image de la feuille (4) par la première caméra (9) tandis que la feuille (4) est sur le plan de travail (2) ; par le système informatique, (8) la réception et l'analyse de l'image et la découverte du repère (15) dans l'image, et la détermination et le décodage du code bidimensionnel pour extraire un code d'identification qui identifie les graphiques sur la feuille (4) et qui la différencie des autres feuilles avec des graphiques différents ; par l'ordinateur, l'accès à une base de données numérique et l'extraction de données stockées liées uniquement au code d'identification extrait et la détermination d'une courbe de découpe pour les graphiques sur la base des données stockées extraites, la courbe de découpe étant spécifique au code d'identification ; la soumission d'instructions informatiques à la machine pour déplacer le groupe de fonctionnement (5) avec l'élément de découpe (6) le long du plan de travail (2) pour découper la feuille (4) le long de la courbe de découpe.

2. Procédé selon la revendication 1, dans lequel les données stockées extraites comprennent des informations lisibles par ordinateur concernant la position et l'orientation du repère (15) par rapport aux graphiques (11A, 11B, 11C) sur la feuille (4) ; le procédé comprenant en outre, par le système informatique (8), la détermination de l'orientation et de la position du repère (15) sur le plan de travail (2) sur la base de l'image du repère (15) et la détermination de l'orientation et de la position des graphiques (11A, 11B, 11C) sur le plan de travail (2) à partir de la position et de l'orientation déterminées du repère (15) et des données stockées extraites contenant la position et l'orientation du repère (15) par rapport aux graphiques (11A, 11B, 11C).

3. Procédé selon la revendication 1 ou 2, dans lequel le groupe de fonctionnement (5) comprend en outre une seconde caméra (7), qui est mobile le long du plan de travail (2) en tant que partie du groupe de fonctionnement (5), la seconde caméra étant configurée pour imager des impressions sur les feuilles imprimées (4) ; le procédé comprenant la fourniture d'une pluralité de marqueurs de référence (27) répartis autour des graphiques sur la feuille (4) ; à partir des données stockées, sur la base du code d'identification, l'extraction d'un premier ensemble de données numériques qui représentent des positions prédéterminées des marqueurs de référence (27) sur la feuille (4) ; sous la commande du système informatique (8), le déplacement de la seconde caméra (7) le long du plan de travail vers les positions prédéterminées et l'imagerie des zones autour des marqueurs de référence réels (27) sur la feuille (4) et l'analyse des images pour détecter des positions réelles des marqueurs de référence (27) ; par le système informatique (8), la comparaison des positions réelles avec les positions prédéterminées des marqueurs de référence (27), et en cas d'écarts, le réglage de la courbe de découpe pour compenser les écarts et la réalisation d'une découpe précise commandée par ordinateur des graphiques malgré des distorsions bidimensionnelles des graphiques sur la feuille (4).

4. Procédé selon la revendication 3, dans lequel la première caméra (9) image une zone plus grande de la surface supérieure (3) avec une résolution inférieure à celle de la seconde caméra (7).

5. Procédé selon la revendication 1 ou 2, le procédé comprenant en outre la fourniture d'une pluralité de marqueurs de référence (27) qui sont répartis autour des graphiques sur la feuille (4) ; à partir des données stockées, sur la base du code d'identification, l'extraction d'un premier ensemble de données numériques qui représentent des positions prédéterminées des marqueurs de référence (27) sur la feuille (4) ; par le système informatique (8), la réception de l'image de la feuille telle que prise par la première caméra (9) et l'analyse automatique de l'image par rapport à des positions réelles des marqueurs de référence (27) sur la feuille (4), la comparaison des positions réelles avec les positions prédéterminées des marqueurs de référence, et en cas d'écarts, le réglage de la courbe de découpe pour compenser les écarts et la réalisation d'une découpe précise commandée par ordinateur des graphiques malgré des distorsions bidimensionnelles des graphiques sur la feuille (4).

6. Procédé selon la revendication 5, dans lequel le procédé comprend le réglage des courbes de découpe par le système informatique (8) sur la base d'images reçues uniquement depuis la première caméra (9).

7. Procédé selon une quelconque revendication précédente, dans lequel la première caméra (9) est une caméra fixe qui image la totalité de la surface supérieure (3) du plan de travail (2).

8. Procédé selon une quelconque revendication précédente, dans lequel le procédé comprend la fourniture au repère (15) d'un cadre rectangulaire ou carré imprimé (16) en plus d'un marqueur d'orientation (22) qui indique de manière unique une direction de lecture du code (18) par rapport au cadre (16), le cadre étant prévu autour du code bidimensionnel lisible optiquement (18) ou faisant partie de celui-ci, dans lequel le procédé comprend le placement du cadre dans l'image par l'ordinateur, l'identification du marqueur d'orientation (21), la détermination de l'orientation et la position du repère (15) sur la surface supérieure (3) à partir du cadre et du marqueur d'orientation (21).

9. Procédé selon une quelconque revendication précédente, dans lequel les images numériques ont des pixels, chaque pixel représentant un élément de zone sur le plan de travail (2) ; dans lequel le procédé comprend la sélection de la résolution de puce de caméra et de l'optique ainsi que la distance de la première caméra (9) à la surface supérieure (3) du plan de travail (3) de sorte que la taille d'un élément de zone est dans la plage de 0,5 à 1 mm.

10. Procédé selon une quelconque revendication précédente, le repère (15) comprenant un cadre sombre rectangulaire (16) ayant une épaisseur dans la plage de 1 à 3 mm et à l'intérieur duquel est prévu un réseau consécutif de champs identiques (18) le long d'une ligne droite (23), chacun des champs identiques (18) étant soit un champ sombre (19) soit un champ clair (20) ou des champs (18, 19) de deux couleurs prédéterminées différentes ; chaque champ (18) ayant une taille le long de la ligne droite (23), la taille le long de la ligne droite (23) étant dans la plage de 2 à 6 mm.

11. Procédé selon la revendication 10, dans lequel le repère (15) est rectangulaire avec une longitude et une longueur de 121 mm et une largeur de 14 mm, et avec un cadre interne (17) à l'intérieur d'un cadre externe (16), le cadre externe (16) étant un cadre sombre et le cadre interne étant un cadre clair, ou les cadres externe et interne ayant deux couleurs prédéterminées différentes ; le cadre externe ayant une épaisseur de 2,5 mm et le cadre interne ayant une épaisseur de 2,5 mm, dans lequel le nombre de champs binaires à l'intérieur du cadre externe (17) et du cadre interne (16) est compris entre 20 et 40, dans lequel chaque champ binaire (18) est un carré de 4 mm ; dans lequel à une extrémité du repère (15), le repère (15) comprend une marque d'orientation (21), la marque d'orientation (21) comprenant un carré (22) décalé d'une ligne centrale (23) qui s'étend centralement le long de la longitude du repère (15), le carré étant clair sur un fond sombre ou ayant une couleur prédéterminée différente de celle du fond autour du carré.

12. Appareil pour un procédé selon l'une quelconque des revendications 1 à 11, l'appareil (1) comprenant une machine de découpe à plateau, qui comprend un plan de travail (2) avec une surface supérieure (3) pour recevoir une feuille imprimée (4) dessus ; l'appareil (1) comprenant une première caméra (9) agencée sur le plan de travail (2) à une première distance au-dessus du plan de travail (2) et configurée pour imager une partie de la surface supérieure ou la totalité de la surface supérieure du plan de travail (2) ; l'appareil (1) comprenant en outre un groupe de fonctionnement (5) mobile le long du plan de travail (2) à une seconde distance du plan de travail (2), et le groupe de fonctionnement (5) comprenant un élément de découpe (6) mobile conjointement avec le groupe de fonctionnement (5) pour découper la feuille (4) lorsqu'elle est placée sur le plan de travail (2) ; dans lequel la première distance est plus grande que la seconde distance, et la caméra (9) est prévue à distance et libre du groupe de fonctionnement (5) pour empêcher une collision mécanique entre le groupe de fonctionnement (5) et la première caméra (9) lorsque le groupe de fonctionnement (5) se déplace le long du plan de travail (2) ; l'appareil (1) comprenant en outre un système informatique (8) connecté fonctionnellement à la première caméra (9) et configuré pour recevoir des images numériques depuis la première caméra (9) ; **caractérisé en ce que** le système informatique (8) est programmé pour analyser les images numériques reçues depuis la première caméra (9) par rapport à des données d'image ressemblant à des caractéristiques pour un repère (15) ; le repère (15) comprenant un code bidimensionnel lisible optiquement pour une séquence numérique ou alphanumérique ; l'appareil (1) étant configuré pour fournir une image de la feuille (4) par la première caméra (9) tandis que la feuille (4) est sur le plan de travail (2) ; le système informatique (8) étant programmé pour recevoir et analyser l'image de la feuille (4) et découvrir le repère (15) dans l'image, et déterminer et décoder le code bidimensionnel pour extraire un code d'identification qui identifie les graphiques sur la feuille (4) et la différencie des autres feuilles avec des graphiques différents ; l'ordinateur étant programmé pour accéder à une base de données numérique et extraire des données stockées liées uniquement au code d'identification extrait et pour déterminer une courbe de découpe pour les graphiques sur la base des données stockées, la courbe de découpe étant spécifique au code d'identification ; l'appareil (1) étant configuré pour soumettre des instructions informatiques à la machine pour déplacer le groupe de fonctionnement (5) avec l'élément de découpe (6) le long du plan de travail (2) pour découper la feuille (4) le long de la courbe de découpe.

13. Appareil selon la revendication 12, dans lequel les données stockées extraites comprennent des informations lisibles par ordinateur concernant la position et l'orientation du repère (15) par rapport aux graphiques (11A, 11B, 11C) sur la feuille (4), dans lequel le système informatique (8) est configuré pour déterminer l'orientation et la position du repère (15) sur le plan de travail (2) sur la base de l'image du repère (15) et déterminer l'orientation et la position des graphiques (11A, 11B, 11C) sur le plan de travail (2) à partir de la position et de l'orientation déterminées du repère (15) et des données stockées extraites contenant la position et l'orientation du repère (15) par rapport aux graphiques (11A, 11B, 11C).

14. Appareil selon la revendication 12 ou 13, dans lequel le système informatique est configuré pour extraire un premier ensemble de données numériques des données stockées extraites, le premier ensemble de données numériques représentant des positions prédéterminées de marqueurs de référence (27) qui sont répartis autour des graphiques sur la feuille (4) ; le système informatique (8) étant en outre programmé pour recevoir l'image de la feuille telle que prise par la première caméra (9) et analyser automatiquement l'image par rapport à des positions réelles des marqueurs de référence (27), comparer les positions réelles avec les positions prédéterminées des marqueurs de référence, et en cas d'écarts, régler la courbe de découpe pour compenser les écarts et réaliser une découpe précise commandée par ordinateur des graphiques malgré des distorsions bidimensionnelles des graphiques sur la feuille (4).

15. Appareil selon la revendication 14, dans lequel le système informatique est configuré pour régler les courbes de découpe par le système informatique sur la base d'images reçues uniquement depuis la première caméra (9).

16. Appareil selon la revendication 14 ou 15, dans lequel le groupe de fonctionnement (5) comprend en outre une seconde caméra (7), qui est mobile le long du plan de travail (2) en tant que partie du groupe de fonctionnement (5), la seconde caméra étant configurée pour imager des impressions sur les feuilles imprimées (4) ; dans lequel le système informatique (8) est configuré pour extraire un premier ensemble de données numériques des données stockées extraites, le premier ensemble de données numériques représentant des positions prédéterminées de marqueurs de référence (27) qui sont répartis autour des graphiques sur la feuille (4) ; l'appareil (1) étant en outre configuré pour un déplacement commandé par ordinateur de la seconde caméra (7) le long du plan de travail (2) vers les positions prédéterminées pour l'imagerie de zones autour des marqueurs de référence (27) et l'analyse des images pour détecter des positions réelles des marqueurs de référence (27) ; l'appareil (1) étant en outre configuré pour la comparaison informatisée des positions réelles avec les positions prédéterminées des marqueurs de référence (27), et en cas d'écarts, le réglage de la courbe de découpe en fonction des écarts pour une découpe précise malgré des distorsions bidimensionnelles des graphiques sur la feuille (4).

17. Appareil selon la revendication 16, dans lequel la première caméra (9) est configurée pour imager une zone plus grande de la surface supérieure avec une résolution inférieure à celle de la seconde caméra (7).

18. Appareil selon l'une quelconque des revendications 12 à 17, dans lequel la première caméra (9) est une caméra fixe qui image la totalité de la surface supérieure (3) du plan de travail (2).
